# EUROPEAN PATENT APPLICATION

(11) **EP 4 309 510 A1**
(43) Date of publication of application: **24.01.2024**
(21) Application number: 23184640.3
(22) Date of filing: 11.07.2023
(51) Int. Cl.: A23K 50/80, A23K 40/25, A23K 20/26, A23K 20/105, A23K 20/22, A23K 10/26, A23K 20/28, A23K 10/24, A23K 10/30, A23K 20/20

(54) **METHOD OF PRODUCING VACUUM EXTRUSION PELLET FOR FISH FEED OR FORMULATED FEED SUPPLEMENT USING LIVESTOCK BLOOD, MACSUMSUK, AND LEGAL CALCIUM**

(30) Priority: 18.07.2022 KR 20220088186
(71) Applicant: Macsumsuk GM Co., Ltd., Gyeongsangbuk-do 38911 (KR)
(72) Inventor: Kwak, Sung Gun, 38882 Yeongcheon-Si (KR); Kwac, Da Eun, 48065 Busan (KR)
(74) Representative: Loo, Chi Ching

(57) **Abstract**

Disclosed is a method of producing pellets for fish feed or a formulated feed supplement in that citric acid, wood vinegar, sodium chloride, yucca extract, nano silver, and zirconium are added and mixed to livestock blood to prepare a primary mixture and bentonite and zeolite are prepared and mixed with the primary mixture, calcined legal calcium, and mineral powder and then, it is vacuum-extruded and dried by dry heat (200 to 500 ° C) for 15 to 40 minutes and cuts and is pulverized to a certain size with a moisture content of 12% or less to fully satisfy the mass production, the slow disintegration of the formulation, excellent preservability, conditions for increasing a weight gain of a feeding target, and the like.

## Description

### BACKGROUND OF THE INVENTION

### Field of the Invention

The present invention relates to a method of producing pellets for fish feed or a formulated feed supplement, and more specifically to a method of producing a vacuum extrusion pellet for fish feed or a formulated feed supplement using livestock blood, macsumsuk, and legal calcium.

### Description of the Related Art

Clay minerals are mineral particles having a particle diameter of 0.002 mm or less and are known that it is as large as the area of a volleyball field, when the surface area of fine particles of 1g is spread out.

Among them, bentonite contains minerals, so it expands 5-20 times in the rumen and contains minerals necessary for the growth of microorganisms. In addition, it helps to improve digestibility and absorption rate by delaying the passing speed of feed due to expansibility thereof.

In particular, it has excellent binding properties and has an effect of increasing hardness during the manufacture of granulated feed.

Like the bentonite, zeolite also plays a role as a buffer, such as improved feed efficiency, loose stool prevention effect, adsorption, and toxin removal effect in intestine through excellent cation exchange capacity (CEC).

The zeolite is generally used as a binder in the manufacturing process of formulated feed.

As described above, a number of technologies for using the clay minerals as raw materials for livestock feed have been developed.

In particular, macsumsuk among clay minerals is known to emit far-infrared rays in a wavelength range beneficial to the living body and has functions of adsorption by porosity, precipitation of minerals, control of water quality, and increase of dissolved oxygen in water.

In order to utilize these beneficial functions of macsumsuk as the feed for livestock, the applicant of the present invention has been registered for "a porous granule coated with an organic material for fish feed or a supplement for mixed feed using blood of livestock and waste shells and its manufacturing method" (Korean Patent Registration No. 10-1462214, Patent Literature 1).

A plurality of patents registered by the present applicant is characterized by using a granulator.

By using the granulator, water contained in the fluidized bed colloidal slurry is rapidly vaporized during the manufacturing process to form a granular layer on the inside thereof and an organic coating layer on the outside thereof. In addition, during the granulation process, a porous structure is formed by evaporation of internal moisture and expansion of bubbles due to temperature expansion. Accordingly, the time for water to permeate into the pores is delayed to improve floating properties, and the ability of digestion and absorption thereof is improved.

However, these granules not only require a considerable amount of operating equipment and fuel to manufacture, but also have a remarkably low production rate. Accordingly, although the quality thereof is excellent, there are problems in that mass production is difficult and it is difficult to supply at a low price.

On the other hand, in addition to Patent Literature 1 above, a pellet feed is widely known.

The pellet feed is manufactured by mixing raw materials and extruding and molding them through constant heat and pressure. However, the extruded pellet feed has many problems in that it is dissolved in water during feed feeding, resulting in a lot of feed loss and excessive contamination of water quality. In addition, when the degree of solidification of the feed is increased, it is difficult for the fish to fully ingest the feed, and even after ingestion, it may cause digestive disorders or reduce the ability to absorb nutrients.

In particular, when producing pellet granules using raw materials such as livestock blood as in Patent Literature 1, there are problems in that the decay rate is fast and the quality is easily deteriorated.

As such, it is necessary to develop technologies that can solve the problem of productivity degradation due to granulation while using livestock blood and macsumsuk as raw materials and prevent quality degradation that occurs during the manufacture of existing pellet feed.

### Patent Literature

Patent Literature 1: Korean Patent Registration No. 10-1462214 (November 10, 2014)

### SUMMARY OF THE INVENTION

The method of producing a vacuum extrusion pellet for fish feed or a formulated feed supplement using livestock blood, macsumsuk, legal calcium (processed product), and the like of the present invention is intended to solve the above-described problems occurring in the related art, and it is intended to be able to prevent quality degradation that occurs during the production of existing pellet feed while solving the problem of productivity degradation due to granulation by using livestock blood, macsumsuk, and the like as a raw material.

Specifically, citric acid, wood vinegar, nano silver, yucca extracts, sodium chloride, zirconium, and the like are appropriately blended with livestock blood and then appropriately blended with macsumsuk, waste shells, and the like, and the blend is vacuum extruded to fully satisfy the slow disintegration of the formulation, excellent preservability, conditions for increasing a weight gain of a feeding target, and the like.

According to one aspect of the present invention so as to accomplish these objects, there is provided to a method of producing a vacuum extrusion pellet for fish feed or formulated feed supplement using livestock blood, macsumsuk, and legal calcium, the method including: a primary mixing step of producing a primary mixture by adding and mixing citric acid, wood vinegar, sodium chloride, yucca extract, nano silver, and zirconium to livestock blood; a waste shell powder preparation step of producing calcined legal calcium by washing waste shells of oysters or abalone to remove foreign substances, calcining the waste shells, and then pulverizing the waste shells; a mineral preparation step of producing mineral powder by preparing and pulverizing macsumsuk; a secondary mixing step of producing pellets by preparing bentonite and zeolite and mixing with the primary mixture, calcined legal calcium, mineral powder in a mixing ratio of 25.5% to 49.9% by weight of the primary mixture, 0.1 to 1% by weight of legal calcium, 10% to 15% by weight of mineral powder, 30.5% to 45.2% by weight of bentonite, and 9.5% to 13.3% by weight of zeolite, and an extrusion molding step of vacuum-extruding the secondary mixture; and a drying step of drying the pellets with dry heat so that a moisture content becomes less than 12%.

In the above configuration, in the primary mixing step, with respect to 100% by weight of the secondary mixture produced in the secondary mixing step, 0.2% to 0.5% by weight of citric acid, 0.1% to 0.3% by weight of wood vinegar, 0.01 % to 0.2% by weight of yucca extract, 0.2% to 0.5% by weight of sodium chloride, 0.1% to 0.3% by weight of nano silver, 0.2% to 0.5% by weight of zirconium, and 23.2% to 49.09% by weight of livestock blood are preferably mixed.

In the above configuration, in the extrusion molding step, the secondary mixture is degassed using a vacuum pump, then the secondary mixture is kneaded and then extruded into a predetermined shape.

### BRIEF DESCRIPTION OF THE DRAWINGS

The above and other objects, features and advantages of the present invention will be more apparent from the following detailed description taken in conjunction with the accompanying drawings, in which:
FIG. 1 illustrates a schematic diagram an example of a vacuum extruder for a progress of the present invention;
FIG. 2 is a graph illustrating a weight change of mud crabs according to Experimental Example 3 in the present invention;
FIG. 3 is a graph illustrating survival rates of mud crabs according to Experimental Example 3 in the present invention;
FIG. 4 and FIG. 5 are photographs illustrating kidneys and livers of slaughtered broilers according to Experimental Example 4 in the present invention; and
FIG. 6 and FIG. 7 are tables illustrating shear force, unsaturated fatty acid, cholesterol content, and weight gain, etc. of broilers according to Experimental Example 5 4 in the present invention.

### [Reference Signs List]

1: Degassing tank
2: Kneading unit
3: Molding mechanism

### DETAILED DESCRIPTION OF THE PREFERRED EMBODIMENT

Hereinafter, a method of producing a vacuum extrusion pellet for fish feed or formulated feed supplement using livestock blood, macsumsuk, and legal calcium of the present invention is described in detail.

The method of producing a pellet according to the present invention specifically proceeds with a primary mixing step, a waste shell powder preparation step, a mineral preparation step, a secondary mixing step, an extrusion molding step and a drying step, and a predetermined size crushing.

The dried pellets may be crushed to a certain size.
1. Primary Mixing Step

A primary mixture is produced by adding and mixing citric acid, wood vinegar, sodium chloride, yucca extract, nano silver, and zirconium to livestock blood.

Livestock blood includes approximately 12.5% by weight of blood cells, 6% by weight of plasma, and the balance of water.

When such livestock blood is exposed to an instantaneous high-temperature environment, moisture evaporates, and protein becomes the main component.

Yucca is a type of cactus that grows wild in desert areas from the southern United States to Central America, and Native Americans have used yucca for treatment and health purposes for a long time. Native Americans also have cooked flowers, fruits, seeds, stems, roots, and the like of yucca in various ways for food. For medical purposes, yucca has been effectively used to treat rheumatism and arthritis and has been used in a method of cutting the stems of yucca and boiling the stems with water to obtain liquid concentrates, thereby feeding the liquid concentrates to an arthritis patient or applying the liquid concentrates to joints. This method has been proven in modem science, and yucca is still being used as a treatment for arthritis in many countries around the world.

Yucca extracts in the existing livestock industry have been mainly used for the purpose of removing odors such as ammonia gas generated from livestock excretion, but in the present invention, the main purpose is to prevent decay and deterioration during and after production.

In the raw material formulation in the primary mixing step, with respect to 100% by weight of the secondary mixture produced in the secondary mixing step, 0.2% to 0.5% by weight of citric acid, 0.1% to 0.3% by weight of wood vinegar, 0.01% to 0.2% by weight of yucca extract, 0.2% to 0.5% by weight of sodium chloride, 0.1% to 0.3% by weight of nano silver, 0.2% to 0.5% by weight of zirconium, and 23.2% to 49.09% by weight of livestock blood are preferably mixed.

In the above formulation, if the contents of the raw materials are out of respective ranges, deterioration during long-term storage and change in formulation disintegration performance occur.

### 2. Waste Shell Powder Preparation Step

Waste shells of oysters or abalone were washed to remove foreign substances, calcined, and then pulverized to produce calcined calcium.

At this time, the calcination temperature is appropriately about 680°C to 900°C, the calcined legal calcium after pulverization preferably has a particle size of 46 to 140 µm (100 to 300 mesh).

Table 1 below shows test results received from Institute of Agricultural Science, Chungnam National University, upon analysis request for calcined legal calcium obtained by washing the waste shells of oyster, removing foreign substances, calcining the waste shells at a temperature of 690°C, and pulverizing the calcined the waste shells. Table 2 below shows test results received from Institute of Agricultural Science, Chungnam National University, upon analysis request for calcined legal calcium obtained by washing the waste shells of abalone, removing foreign substances, calcining the waste shells at a temperature of 690°C, and pulverizing the calcined the waste shells.

**[Table 1]**

| Test Item | Unit | Test Result |
|---|---|---|
| Moisture | % by weight | 0.02 |
| Crude Ash | % by weight | 99.5 |
| Calcium | % by weight | 39.43 |
| Soil | % by weight | 0.05 |
| Magnesium | % by weight | 0.2 |
| Total Bacterial Count | cfu/g | 0 |
| The Number of Escherichia Coli | cfu/g | 0 |
| Salmonella | | Negative |

**[Table 2]**

| Test Item | Unit | Test Result |
|---|---|---|
| Moisture | % by weight | 0.03 |
| Crude Ash | % by weight | 99.01 |
| Calcium | % by weight | 38.79 |
| Soil | % by weight | 0.07 |
| Magnesium | % by weight | 0.08 |
| Total Bacterial Count | cfu/g | 0 |
| The Number of Escherichia Coli | cfu/g | 0 |
| Salmonella | | Negative |

As shown in Table 1, the contents of crude ash, calcium, and the like were almost the same in the washed, calcined, and pulverized waste shells of oyster and abalone, and it can be seen that no bacteria were detected in both.

### 3. Mineral Preparation Step

Macsumsuk was prepared and pulverized to produce mineral powder.

At this time, calcination may be performed after pulverization, and the calcination temperature is preferably 800°C to 1,100°C.

Macsumsuk includes components shown in Table 3 below, is a rock belonging to quartz porphyry among igneous rocks, is generally characterized by being easily broken due to weathering. In particular, white feldspar is often kaolinized, and most of the biotite is also oxidized and scattered in the form of iron oxide.

Macsumsuk is characterized by containing a large amount of amphibole, includes a large amount of alumina oxide so that α-rays exist, and it is known that macsumsuk have a beneficial effect on living things.

**[Table 3]**

| Ingredient Name | Content (% by weight) |
|---|---|
| Silicon Dioxide (SiO₂) | 68.8 |
| Aluminum Oxide (Al₂O₃) | 12.99 |
| Iron Oxide (Fe₂O₃) | 2.47 |
| Calcium Oxide (CaO) | 1.99 |
| Magnesium Oxide (MgO) | 0.56 |
| Potassium Oxide (K₂O) | 4.53 |
| Sodium Oxide (Na₂O) | 6.25 |
| Titanium Dioxide (TiO₂) | 0.23 |
| Phosphorus Pentoxide (P₂O₅) | 0.06 |
| Manganese Oxide (MnO) | 0.06 |
| Ignition Loss (when Calcined) | 2.09 |

The wavelength generated from macsumsuk is within the range of 8 to 14 µm, and macsumsuk is known as a mineral that emits far-infrared rays in wavelength ranges beneficial to the living body.

It is known that the far-infrared rays in this wavelength range activate living cells and promote metabolism.

Macsumsuk is pulverized based on the fact that the emissivity of far-infrared rays generated when macsumsuk is finely powdered is higher than the emissivity of far-infrared rays generated in a rocky state of macsumsuk.

Macsumsuk powder preferably has a particle size of 46 to 140 µm (100 to 300 mesh).

In addition, the same processing is applied to clay minerals in addition to macsumsuk.

### 4. Secondary Mixing Step

The secondary mixture is produced by preparing bentonite and zeolite and mixing with the primary mixture, calcined calcium, and mineral powder.

Bentonite facilitates the digestion and use of fiber in feed and serves to properly control the passage rate and osmotic pressure of liquid substances.

In particular, owing to the excellent binding properties thereof, bentonite serves to increase hardness of pellets.

In the present invention, pellets are produced by including a larger amount of bentonite than in the production of granules, so the formulation can be maintained more smoothly.

Like bentonite, zeolite also has an excellent cation exchange effect to serve as a buffer with effects of improving feed efficiency, preventing loose stools, providing adsorbability, and removing intestinal toxins.

At this time, the formulation includes 25.5% to 49.9% by weight of the primary mixture, 0.1% to 1% by weight of calcined legal calcium, 10% to 15% by weight of mineral powder, 30.5% to 45.2% by weight of bentonite, and 9.5% to 13.3% by weight of zeolite.

That is, the blending of the raw materials including the primary mixing step and the secondary mixing step will be performed as shown in Table 4 below.

**[Table 4]**

| Item | Composition (% by weight) | | Remarks |
|---|---|---|---|
| Livestock Blood | 49.09 | 23.2 | Primary Mixture |
| Citric Acid | 0.2 | 0.5 | |
| Wood Vinegar | 0.1 | 0.3 | |
| Sodium Chloride | 0.2 | 0.5 | |
| Yucca Extract | 0.01 | 0.2 | |
| Nano Silver | 0.1 | 0.3 | |
| Zirconium | 0.2 | 0.5 | |
| Calcined Legal Calcium | 0.1 | 1 | - |
| Mineral Powder | 10 | 15 | - |
| Bentonite | 30.5 | 45.2 | - |
| Zeolite | 9.5 | 13.3 | - |
| Total | 100 | 100 | - |

In the above formulation, if the contents of the raw materials are out of the respective ranges, deterioration during long-term storage and change in formulation disintegration performance occur.

### 5. Extrusion Molding Step

Pellets are produced by vacuum extrusion of the secondary mixture.

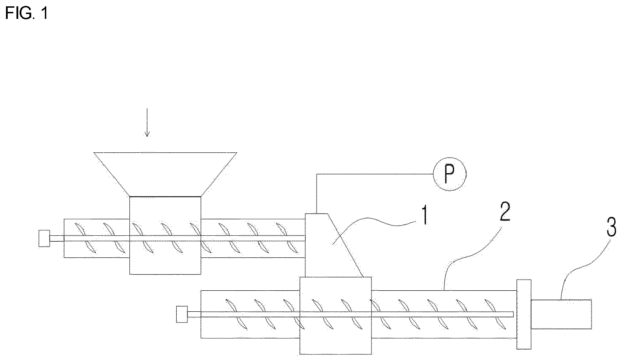

FIG. 1 illustrates an example of a vacuum extruder.

FIG. 1 illustrates an example in which a molding machine includes a degassing tank (1) that accommodates the raw material, is connected to a vacuum pump (P), and depressurizes the inside to degas the secondary mixture, a kneading unit (2) that receives and kneads the raw material sent from the degassing tank (1), and a molding mechanism (3) for molding and extruding the raw material into a desired shape after a kneading process at a terminal end of the kneading unit (2).

A cutting machine for cutting the extruded and discharged pellets is installed on the outlet side of the molding mechanism 3, and the produced pellets are cut into a predetermined unit length.

In addition, a heater (not illustrated) is installed in the kneading unit 2 to heat the secondary mixture.

During the secondary mixing step, the calcined legal calcium and mineral powder shows a porous form in a state in which a plurality of pores are formed inside, and air is present in this part.

In this state, after the secondary mixture is mixed with the primary mixture, which is mainly livestock blood, the mixture passes through the degassing tank (1), and the air escapes from the inside of the pore to the outside by the suction force generated in the degassing tank (1). The primary mixture, which is mainly liquid, penetrates into those places.

In addition, a portion of the primary mixture serves to firmly attach the solid powder particles added during secondary mixing to each other.

That is, in the extrusion molding step, air bubbles in the internal pores of the porous powder particles escape by the negative pressure in the degassing tank, the primary mixture penetrates into those spaces, the mixture passes through the kneading unit 2, the liquid component in the secondary mixture vaporizes while receiving heat and pressure, the particles become firmly attached to each other, and the firm attachment serves to suppress the disintegration of the formulation.

### 6. Drying Step

The pellets are dried with dry heat so that a moisture content becomes less than 12%.

### <Production Pellets in Examples and Comparative Examples>

Pellets were produced by mixing each raw material as shown in Table 5 below.

First, a primary mixture was produced by mixing livestock blood, citric acid, wood vinegar, sodium chloride, yucca extract, and nano silver, calcined legal calcium and mineral powder were produced and prepared according to the above processing, then the raw materials were mixed according to the blend shown in table below to produce a secondary mixture, the secondary mixture was vacuum-extruded to produce pellets, and then the pellets were dried with dry heat so that a moisture content became less than 12%.

**[Table 5]**

| Item | | A | B | C | D | E | F | G | H | I | J | K |
|---|---|---|---|---|---|---|---|---|---|---|---|---|
| Example | 1 | 49.09 | 0.2 | 0.1 | 0.2 | 0.01 | 0.1 | 0.2 | 0.1 | 10 | 30.5 | 9.5 |
| | 2 | 23.2 | 0.5 | 0.3 | 0.5 | 0.2 | 0.3 | 0.5 | 1 | 15 | 45.2 | 13.3 |
| | 3 | 39.1 | 0.1 | 0.2 | 0.4 | 0.1 | 0.2 | 0.4 | 0.5 | 13 | 35 | 11 |
| | 4 | 38.6 | 0.6 | 0.2 | 0.4 | 0.1 | 0.2 | 0.4 | 0.5 | 13 | 35 | 11 |
| | 5 | 38.6 | 0.3 | 0.5 | 0.4 | 0.1 | 0.2 | 0.4 | 0.5 | 13 | 35 | 11 |
| | 6 | 38.75 | 0.3 | 0.35 | 0.4 | 0.1 | 0.2 | 0.4 | 0.5 | 13 | 35 | 11 |
| | 7 | 39.15 | 0.3 | 0.2 | 0.15 | 0.1 | 0.2 | 0.4 | 0.5 | 13 | 35 | 11 |
| | 8 | 38.75 | 0.3 | 0.2 | 0.55 | 0.1 | 0.2 | 0.4 | 0.5 | 13 | 35 | 11 |
| | 9 | 38.995 | 0.3 | 0.2 | 0.4 | 0.005 | 0.2 | 0.4 | 0.5 | 13 | 35 | 11 |
| | 10 | 38.79 | 0.3 | 0.2 | 0.4 | 0.21 | 0.2 | 0.4 | 0.5 | 13 | 35 | 11 |
| | 11 | 39.05 | 0.3 | 0.2 | 0.4 | 0.1 | 0.05 | 0.4 | 0.5 | 13 | 35 | 11 |
| | 12 | 38.75 | 0.3 | 0.2 | 0.4 | 0.1 | 0.35 | 0.4 | 0.5 | 13 | 35 | 11 |
| | 13 | 39.12 | 0.3 | 0.2 | 0.4 | 0.1 | 0.2 | 0.18 | 0.5 | 13 | 35 | 11 |
| | 14 | 38.78 | 0.3 | 0.2 | 0.4 | 0.1 | 0.2 | 0.52 | 0.5 | 13 | 35 | 11 |
| Comparative Example | 1 | 39.35 | 0.3 | 0.2 | 0.4 | 0.1 | 0.2 | 0.4 | 0.05 | 13 | 35 | 11 |
| | 2 | 38.3 | 0.3 | 0.2 | 0.4 | 0.1 | 0.2 | 0.4 | 1.1 | 13 | 35 | 11 |
| | 3 | 42.9 | 0.3 | 0.2 | 0.4 | 0.1 | 0.2 | 0.4 | 0.5 | 9 | 35 | 11 |
| | 4 | 35.9 | 0.3 | 0.2 | 0.4 | 0.1 | 0.2 | 0.4 | 0.5 | 16 | 35 | 11 |
| | 5 | 44.9 | 0.3 | 0.2 | 0.4 | 0.1 | 0.2 | 0.4 | 0.5 | 13 | 30 | 11 |
| | 6 | 27.9 | 0.3 | 0.2 | 0.4 | 0.1 | 0.2 | 0.4 | 0.5 | 13 | 46 | 11 |
| | 7 | 40.9 | 0.3 | 0.2 | 0.4 | 0.1 | 0.2 | 0.4 | 0.5 | 13 | 35 | 9 |
| | 8 | 36.4 | 0.3 | 0.2 | 0.4 | 0.1 | 0.2 | 0.4 | 0.5 | 13 | 35 | 13.5 |

| | | | | | | | | | | | | |
|---|---|---|---|---|---|---|---|---|---|---|---|---|
| (A: Livestock Blood, B: Citric Acid, C: Wood Vinegar, D: Sodium Chloride, E: Yucca Extract, F: Nano Silver, G: Zirconium, H: Calcined Legal Calcium, I: Mineral Powder, J: Bentonite, K: Zeolite, Unit: % by weight) | | | | | | | | | | | | |

### <Experimental Example 1> Formulation Disintegration Rate Measurement Experiment

After putting the pellets of Examples and Comparative Examples into a water bath under identical conditions, whether the formulation was disintegrated was measured after 2 minutes, 5 minutes, and 10 minutes had elapsed, and the results are shown in Table 6 below.

**[Table 6]**

| Item | | 2 Minutes | 5 Minutes | 10 Minutes |
|---|---|---|---|---|
| Example | 1 | No Disintegration | No Disintegration | No Disintegration |
| | 2 | No Disintegration | No Disintegration | No Disintegration |
| | 3 | No Disintegration | Disintegrated | Disintegrated |
| | 4 | No Disintegration | Disintegrated | Disintegrated |
| | 5 | No Disintegration | No Disintegration | Disintegrated |
| | 6 | No Disintegration | Disintegrated | Disintegrated |
| | 7 | No Disintegration | No Disintegration | Disintegrated |
| | 8 | No Disintegration | Disintegrated | Disintegrated |
| | 9 | No Disintegration | No Disintegration | Disintegrated |
| | 10 | No Disintegration | Disintegrated | Disintegrated |
| | 11 | No Disintegration | No Disintegration | Disintegrated |
| | 12 | No Disintegration | No Disintegration | Disintegrated |
| | 13 | No Disintegration | No Disintegration | Disintegrated |
| | 14 | No Disintegration | Disintegrated | Disintegrated |
| Comparative Example | 1 | No Disintegration | Disintegrated | Disintegrated |
| | 2 | Disintegrated | Disintegrated | Disintegrated |
| | 3 | Disintegrated | Disintegrated | Disintegrated |
| | 4 | No Disintegration | Disintegrated | Disintegrated |
| | 5 | Disintegrated | Disintegrated | Disintegrated |
| | 6 | No Disintegration | Disintegrated | Disintegrated |
| | 7 | Disintegrated | Disintegrated | Disintegrated |
| | 8 | Disintegrated | Disintegrated | Disintegrated |

As can be seen from the table above, in the Examples, no formulation disintegration was found after 2 minutes, while there were many cases where formulation was disintegrated in the Comparative Examples.

In addition, after 5 minutes, formulation was disintegrated in only some of the Examples, while formulation was disintegrated in all the Comparative Examples.

### <Experimental Example 2> Sensory Evaluation of Storage

After the pellets of the Examples and Comparative Examples were placed to be exposed to air in the shade at room temperature, the occurrence of deterioration and decay was measured on the Day 7, 15, 30, and 50, respectively, and the results are shown in Table 7 below.

Deterioration was determined by changes in the appearance of the pellets, and decay was determined based on the occurrence of mold and odor in addition to deterioration.

**[Table 7]**

| Item | | Day 7 | Day 15 | Day 30 | Day 50 |
|---|---|---|---|---|---|
| Exampl e | 1 | No Change | No Change | No Change | No Change |
| | 2 | No Change | No Change | No Change | No Change |
| | 3 | No Change | No Change | No Change | No Change |
| | 4 | No Change | No Change | No Change | No Change |
| | 5 | No Change | No Change | No Change | No Change |
| | 6 | No Change | No Change | No Change | No Change |
| | 7 | No Change | No Change | No Change | No Change |
| | 8 | No Change | No Change | No Change | No Change |
| | 9 | No Change | No Change | No Change | No Change |
| | 10 | No Change | No Change | No Change | No Change |
| | 11 | No Change | No Change | No Change | No Change |
| | 12 | No Change | No Change | No Change | No Change |
| | 13 | Deteriorated | No Change | No Change | No Change |
| | 14 | No Change | No Change | No Change | No Change |
| Compa rative Exampl e | 1 | No Change | Deteriorated | Decayed | Decayed |
| | 2 | Deteriorated | Deteriorated | Decayed | Decayed |
| | 3 | No Change | Deteriorated | Decayed | Decayed |
| | 4 | Deteriorated | Deteriorated | Decayed | Decayed |
| | 5 | No Change | Deteriorated | Decayed | Decayed |
| | 6 | No Change | Deteriorated | Deteriorated | Decayed |
| | 7 | Deteriorated | Decayed | Decayed | Decayed |
| | 8 | Deteriorated | Deteriorated | Decayed | Decayed |

As shown in Table 7, in all of the Examples, deterioration or decay did not occur until 50 days had elapsed.

### <Experimental Example 3> Mud (Mangrove) Crab Farming Test

After the pellets of Example 1 were applied to the farming of mud crabs in a farm in Capis, Philippines, the effects were evaluated.

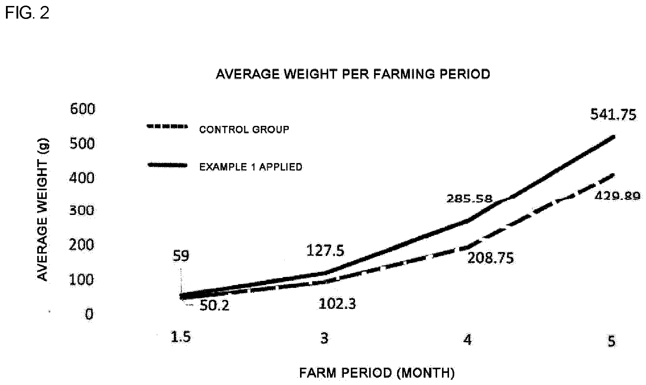

In the experiment, 100 mg of pellets per square meter (Example 1) was applied to three of the five fish farm cells, and the remaining two cells were used as unapplied controls, and the farming conditions of the five cells were all the same. The weight of the crab was measured every time a certain amount of time elapsed, and the results are shown in FIG. 2.

As understood from FIG. 2, the difference from the control group was not great until three months, but it was found that there was a difference of up to 100 g (1/4 of the body weight) or more after five months.

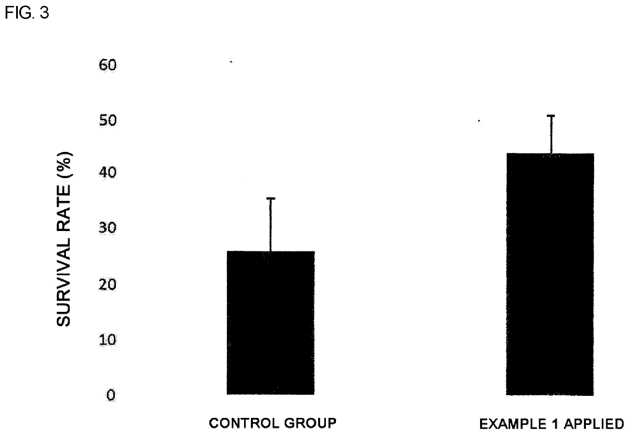

In addition, the survival rates of mud crabs in the tank after five months were measured, and the results are shown in FIG. 3.

As understood from FIG. 3, there was a great difference between the survival rates of mud crabs in the farm where the pellets of Example 1 were applied and the survival rates in the other cases.

### <Experimental Example 4> Broiler Breeding Test 1

Luzon State University specialized in animal science in the Philippines was commissioned to use the pellets of Example 1 for broiler breeding, and then the broilers were slaughtered to compare the size and freshness of kidneys and livers.

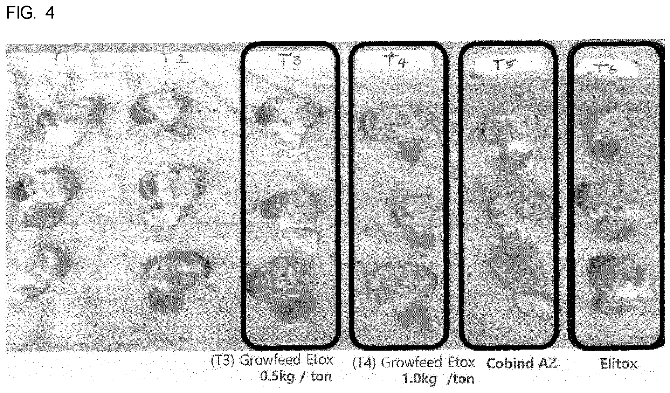

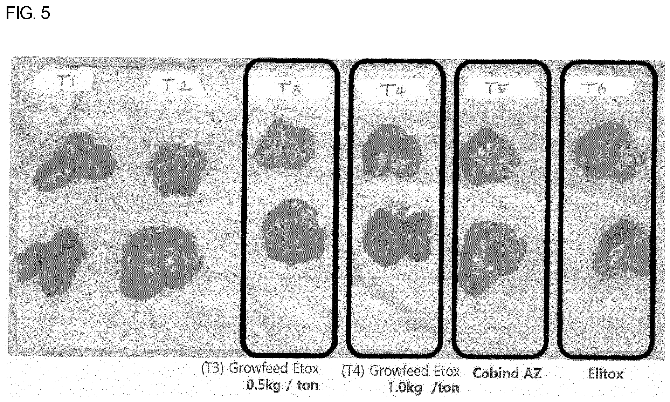

The results thereof are shown in FIGS. 4 and 5 below.

In the figures, the cases where the Examples were applied are T3 and T4, and it was found that the kidneys were larger and fresher than the other test groups.

The livers were also found to be larger and fresher.

### <Experimental Example 5> Broiler Breeding Test 2

Gyeongsangbuk-do Livestock Research Institute was commissioned to apply the Examples to broiler breeding.

The test period was conducted for 5 weeks from 2 days to 35 days of hatching, and nothing was added for the control group while 0.5% by weight of Example 1 was added to the feed for the test group.

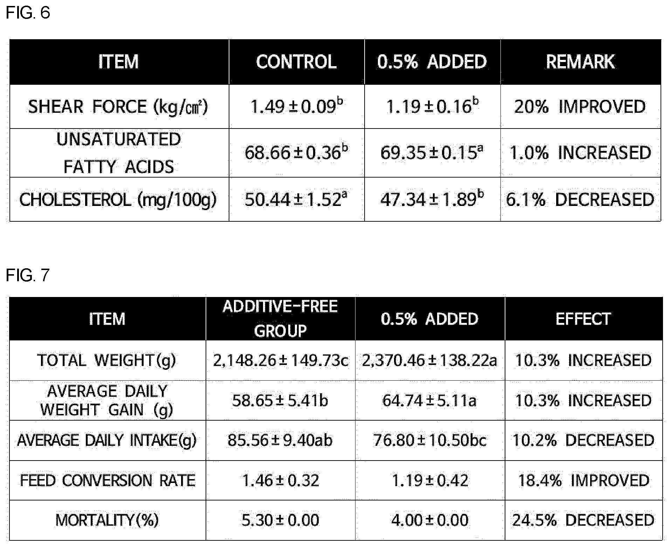

After the breeding was over, shear force, unsaturated fatty acid, cholesterol content, and weight gain were evaluated for 150 Ross species regardless of gender, and the test results are shown in FIGS. 6 and 7.

As understood from FIG. 6, the results were significant in that the test group to which 0.5% was added showed increase of 20% in shear force and decrease of 6.1 % in cholesterol compared to the comparison target.

In addition, as understood from FIG. 7, another significant result was obtained that the total weight increased by 10.3%, and the mortality rate decreased by 24.5%.

According to the present invention, it is possible to prevent quality degradation that occurs during the production of existing pellet feed while solving the problem of productivity degradation due to granulation by using livestock blood, macsumsuk, and the like as a raw material.

Specifically, citric acid, wood vinegar, yucca extracts, sodium chloride, zirconium, nano silver, and the like are appropriately blended with livestock blood and then appropriately blended with macsumsuk, waste shells, and the like, and the blend is vacuum extruded to fully satisfy the slow disintegration of the formulation, excellent preservability, conditions for increasing a weight gain of a feeding target, and the like.

While the present invention has been described with respect to the specific embodiments, it will be apparent to those skilled in the art that various changes and modifications may be made without departing from the spirit and scope of the invention as defined in the following claims.

## Claims

1. A method of producing a vacuum extrusion pellet for fish feed or formulated feed supplement using livestock blood, macsumsuk, and legal calcium, the method comprising:
a primary mixing step of producing a primary mixture by adding and mixing citric acid, wood vinegar, sodium chloride, yucca extract, nano silver, and zirconium to livestock blood;
a waste shell powder preparation step of producing calcined legal calcium by washing waste shells of oysters or abalone to remove foreign substances, calcining the waste shells, and then pulverizing the waste shells;
a mineral preparation step of producing mineral powder by preparing and pulverizing macsumsuk;
a secondary mixing step of producing pellets by preparing bentonite and zeolite and mixing with the primary mixture, calcined legal calcium, mineral powder in a mixing ratio of 25.5% to 49.9% by weight of the primary mixture, 0.1 to 1 % by weight of legal calcium, 10% to 15% by weight of mineral powder, 30.5% to 45.2% by weight of bentonite, and 9.5% to 13.3% by weight of zeolite, and an extrusion molding step of vacuum-extruding the secondary mixture; and
a drying step of drying the pellets with dry heat so that a moisture content becomes less than 12%.
